# EUROPÄISCHE PATENTSCHRIFT

(11) **EP 2 871 134 B1**
(45) Veröffentlichungstag und Bekanntmachung des Hinweises auf die Patenterteilung: **08.03.2017**
(21) Anmeldenummer: 14191587.6
(22) Anmeldetag: 04.11.2014
(51) Int. Cl.: B65B 29/08, B65B 7/28, B65D 81/34, A23L 3/3418, B65B 25/22, B65D 77/20, B65B 7/16, A23L 5/30

(54) **Verfahren und Vorrichtung zum Verpacken von Fertignahrung in zumindest einer Schale**
Method and device for packaging ready meals in at least one bowl
Procédé et dispositif de conditionnement de plat cuisiné dans au moins une coque

(30) Priorität: 06.11.2013 DE 102013018629
(43) Veröffentlichungstag der Anmeldung: 13.05.2015
(73) Patentinhaber: Schrade, Karl-Wilhelm, 26340 Zetel (DE)
(72) Erfinder: Schrade, Karl-Wilhelm, 26340 Zetel (DE)
(74) Vertreter: Jabbusch, Matthias

(56) Entgegenhaltungen:
- EP-A1- 0 967 160
- DE-A1- 2 610 083
- GB-A- 2 251 541
- US-A- 4 870 800

## Beschreibung

Die Erfindung betrifft ein Verfahren zum Verpacken von Fertignahrung in zumindest einer Schale mit umlaufendem Rand, bei dem die Ausgangsbestandteile der Fertignahrung in die Schale eingebracht werden.

Bei im Stand der Technik bekannten Verfahren wird für Fertignahrung eine Zubereitung der Ausgangsbestandteile in der Schale vorgenommen. Die Schale wird dazu mit den Ausgangsbestandteilen in offener Form einer Zubereitung zugeführt. Damit kann auf die besondere Beschaffenheit der einzelnen Ausgangsbestandteile Bezug genommen werden und es ist eine selektive Zubereitungsart möglich.

Nach der Zubereitung beispielsweise durch Erwärmung wird dann die offene Schale versiegelt, nachteilig ist hierbei, dass an die erwärmten und damit zum Teil pasteurisierten Ausgangsbestandteile eine Folie von außen zugeführt wird, die mit Keimen und Verunreinigungen belastet sein kann.

Im Stand der Technik wurde bereits weiter vorgeschlagen, die Ausgangsbestandteile vor ihrer Zubereitung in der Schale zu versiegeln, d. h. die Schale mit einer Deckelfolie vollständig zu verschließen. Bei einer anschließenden Erwärmung der Komponenten werden diese beispielsweise mit durch eine Mikrowelle erzeugten Dampf gegart. Das hat aber zur Folge, dass bei einem Menü mit mehreren voneinander verschiedenen Ausgangsbestandteilen alle Ausgangsbestandteile gleichermaßen der Wärmeenergie ausgesetzt sind. Das Garverhalten einzelner Ausgangsbestandteile kann hierbei nicht berücksichtigt werden.

Bei diesen bekannten gattungsgemäßen Verfahren wird somit wie mit einem Dampfgarer auf einer Ebene gearbeitet. Beispielsweise werden Gemüse und Lachs jeweils der gleichen Temperatur und Garzeit ausgesetzt, was zwangsläufig dazu führt, dass bei einer Zugrundelegung der längeren Garzeit des Lachses das Gemüse zerkocht wird.

Der Erfindung liegt die Aufgabe zugrunde, ein Verfahren der eingangs genannten Gattung aufzuzeigen, mit dem ein qualitativ hochwertiges Herstellen von Fertignahrung unter Reduzierung ihrer Keimbelastung gelingt.

Diese Aufgabe ist erfindungsgemäß dadurch gelöst, dass auf den umlaufenden Rand der Schale eine Deckelfolie unter Einbringen zumindest zweier nicht gesiegelter Randabschnitte aufgesiegelt wird, dass anschließend eine Zubereitung der Fertignahrung in der Schale durchgeführt wird und dass eine nochmalige Siegelung der Deckelfolie über den vollständigen umlaufenden Rand der Schale hinweg vorgenommen wird.

Bei dem erfindungsgemäßen Verfahren kann ein selektives Zubereiten der Ausgangsbestandteile wie in einer offenen Schale erfolgen. In die verschiedenen Ausgangsbestandteile können voneinander verschiedene Garenergien eingebracht werden, überschüssige Wärme kann aus der Schale entweichen, da die Deckelfolie nicht vollständig auf den umlaufenden Rand der Schale aufgesiegelt ist. Es bleiben wenigstens zwei nicht gesiegelte Randabschnitte.

Die Deckelfolie ist somit einer qualitativen Zubereitung der Ausgangsbestandteile nicht im Wege. Andererseits ist die Deckelfolie während der Zubereitung der Ausgangsbestandteile anwesend, so dass durch das Einbringen von Wärmeenergie eine weitgehende Sterilisierung der Deckelfolie erfolgt. Ist die Zubereitung der Ausgangsbestandteile abgeschlossen, wird die Schale erfindungsgemäß durch einen weiteren Siegelvorgang derselben Folie vollständig verschlossen. Es wird dann keine neue Folie an die Schale herangeführt, vielmehr wird die bereits teilweise befestigte und während des Erwärmungsprozesses anwesende Folie nunmehr vollständig auf den umlaufenden Rand aufgesiegelt, so dass die Verpackung dicht ist.

Nach einer ersten Weiterbildung des erfindungsgemäßen Verfahrens ist vorgesehen, dass den nicht gesiegelten Randabschnitten vor dem zweiten Siegeln der Deckelfolie freie Enden von Gasleitungen angenähert werden. Über diese Leitungen kann beispielsweise eine Schutzgasbefüllung der Schale erfolgen. An eine Gasleitung kann auch ein Vakuum angelegt werden, um eine Atmosphäre aus der Schale abzuziehen. Dabei kann der Sauerstoffgehalt des abgeführten Gases gemessen werden, z. B. dann, wenn Luft durch ein Schutzgas wie Stickstoff ersetzt werden soll.

Die Zubereitung der Fertignahrung kann wie im Stand der Technik mit Mikrowellen erfolgen, durch die dabei entstehende Wärme wird die Deckelfolie sterilisiert.

Durch eine Gasleitung kann eine vordefinierte Menge kalter gefilterter Luft bzw. Gas in die Schale eingedrückt werden. Über eine andere Gasleitung wird gleichzeitig die Atmosphäre in der Schale abgesaugt. Die zuführende Leitung kann dann geschlossen werden und so lange Atmosphäre aus der Schale abgesaugt werden, bis ein Sauerstoffgehalt nahe 0 % erreicht ist. Mit dem Austausch der Atmosphäre wird somit ein vorwählbares Vakuum gezogen, es kann auch eine vorbestimmbare Menge an Stickstoff zugeführt werden. Dabei kann auch ein Tiefziehen der Deckelfolie erfolgen.

Eine für die Lösung der Aufgabe geeignete Vorrichtung zeichnet sich dadurch aus, dass das vorhandene Siegelwerkzeug oder ein weiteres Siegelwerkzeug zum teilweisen Aufsiegeln der Deckelfolie auf den umlaufenden Rand vorgesehen ist.

Die Vorrichtung hat bereits vom Stand der Technik gemäß US-A-4 870 800 her ein Siegelwerkzeug, mit dem auf den umlaufenden Rand der Schale eine Deckelfolie vollständig aufgesiegelt werden kann. Mit diesem Siegelwerkzeug oder gegebenenfalls mit einem weiteren Siegelwerkzeug wird ein teilweises Aufsiegeln der Deckelfolie auf den Rand ermöglicht. Damit werden die verfahrensgemäß vorgesehenen nicht gesiegelten Randabschnitte zur Verfügung gestellt, über die auch Gase hinzugeführt oder abgeführt werden können.

Das Siegelwerkzeug zum teilweisen Aufsiegeln kann beispielsweise den umlaufenden Rand der Schale unvollständig nachbilden, indem zumindest zwei Abschnitten des umlaufenden Randes kein Abschnitt des Siegelwerkzeugs zugeordnet ist. In einem nachfolgenden vollständigen Siegelschritt sind dann sämtlichen Abschnitten des umlaufenden Randes Abschnitte des Siegelwerkzeuges zugeordnet.

Den nicht gesiegelten Abschnitten des umlaufenden Randes können Gasleitungen zugeordnet sein, deren freien Enden den nicht gesiegelten Abschnitten angenähert sind. Dabei kann einer Gasleitung ein Sauerstoffgehaltsensor zugeordnet sein.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht einer für das erfindungsgemäße Verfahren verwendbaren Schale, und
- Fig. 2:: eine Seitenansicht der Schale gemäß Fig. 1.

Bei dem erfindungsgemäßen Verfahren zum Verpacken von Fertignahrung werden Ausgangsbestandteile, beispielsweise Kartoffeln, Gemüse oder Fleisch, in eine Schale 1 eingelegt. Die Schale 1 hat einen Schalenboden sowie Schalenwände, an den oberen Enden der Schalenwände ist die Schale 1 mit einem umlaufenden Rand 2 ausgerüstet.

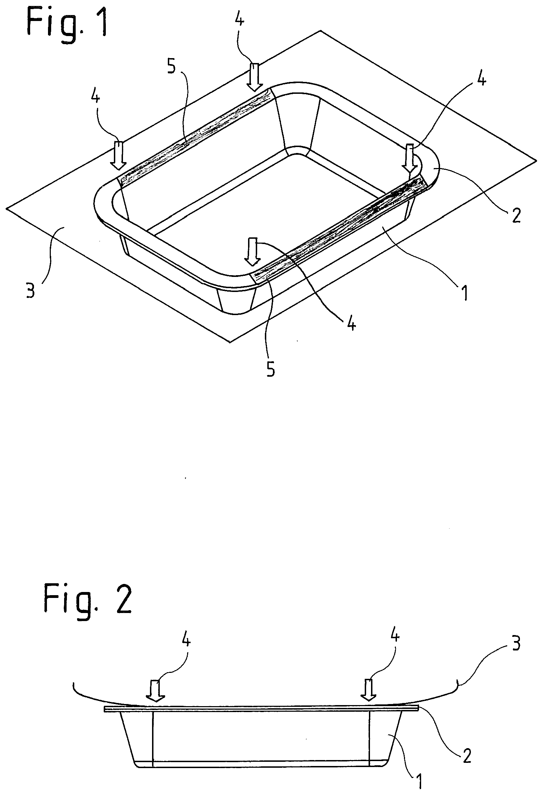

Fig. 1 zeigt, dass auf den umlaufenden Rand 2 eine Deckelfolie 3 aufgelegt ist. In Fig. 1 wird diese Deckelfolie 3, wie mit Pfeilen 4 dargestellt, entlang der längeren Abschnitte des umlaufenden Randes 2 auf den umlaufenden Rand 2 aufgesiegelt. Die Siegelung zwischen Deckelfolie 3 und umlaufendem Rand 2 erfolgt somit im Bereich der dunklen Abschnitte 5. Die kürzeren Abschnitte des umlaufenden Randes 2 im Bereich der Stirnwände der Schale 1 werden dagegen nicht gesiegelt.

Fig. 1 zeigt also den Zustand, in dem die in der Schale aufgenommenen Ausgangsmaterialien zubereitet werden können. Innerhalb der Schale 1 kann eine Atmosphäre entstehen, ein Dampfdruck wird jedoch weitgehend vermieden.

Auch Fig. 2 zeigt den vorversiegelten Zustand der Schale 1 mit der Deckelfolie 3. Diese hebt sich in den nicht gesiegelten Bereichen des umlaufenden Randes 2 von diesem ab, so dass ein Druckabbau im Inneren der Schale 1 über diese nicht gesiegelten Bereiche des umlaufenden Randes 2 möglich ist. In gleicher Weise kann über diese nicht gesiegelten Bereiche des Randes 2 über nicht weiter dargestellte Gasleitungen Schutzgas zugeführt werden oder Atmosphäre abgeführt werden.

Ist die Zubereitung der in der Schale 1 aufgenommenen Ausgangsbestandteile abgeschlossen, erfolgt ein nochmaliges, nunmehr vollständiges Aufsiegeln der Deckelfolie 3 auf den umlaufenden Rand 2. Die Abschnitte 5 werden dann noch einmal gesiegelt, was aber ihre Funktion nicht behindert. Die bisher nicht gesiegelten Abschnitte des umlaufenden Randes 2 werden dann zum ersten Mal mit der Deckelfolie 3 gesiegelt, diese kann anschließend entlang der Kontur des umlaufenden Randes 2 abgeschnitten werden.

## Patentansprüche

1. Verfahren zum Verpacken von Fertignahrung in zumindest einer Schale mit umlaufendem Rand, bei dem die Ausgangsbestandteile der Fertignahrung in die Schale eingebracht werden,
**dadurch gekennzeichnet,**
**dass** auf den umlaufenden Rand (2) der Schale (1) eine Deckelfolie (3) unter Einbringen zumindest zweier nicht gesiegelter Randabschnitte aufgesiegelt wird, dass anschließend eine Zubereitung der Fertignahrung in der Schale (1) durchgeführt wird und dass eine nochmalige Siegelung der Deckelfolie (3) über den vollständigen umlaufenden Rand (2) der Schale (1) hinweg vorgenommen wird.

2. Verfahren nach Anspruch 1, **dadurch gekennzeichnet, dass** den nicht gesiegelten Randabschnitten vor dem zweiten Siegeln der Deckelfolie (3) freie Enden von Gasleitungen angenähert werden.

3. Verfahren nach Anspruch 1 oder 2, **dadurch gekennzeichnet, dass** die Zubereitung der Fertignahrung mit Mikrowellen durchgeführt wird.

## Claims

1. A method for packaging ready-made meals in at least one bowl with a wraparound edge, in which the starting ingredients of the ready-made meals are introduced into the bowl,
**characterized in that**
a cover film (3) is sealed onto the wraparound edge (2) of the bowl (1), interspersing at least two non-sealed edge sections, that the ready-made meal is then prepared in the bowl (1), and that the cover film (3) is sealed once more over the entire wraparound edge (2) of the bowl (1).

2. The method according to claim 1, **characterized in that** free ends of gas lines are moved closer to the non-sealed edge sections before the cover film (3) is sealed a second time.

3. The method according to claim 1 or 2, **characterized in that** the ready-made food is prepared with microwaves.

## Revendications

1. Procédé destiné à conditionner des plats industriels dans au moins une coque avec un bord périphérique, lors duquel on introduit les composants de départ de l'aliment industriel dans la coque,
**caractérisé en ce que**
sur le bord (2) périphérique de la coque (1), on scelle un film (3) formant couvercle en ménageant au moins deux sections de bord non scellées, **en ce que** par la suite, on procède à une préparation du plat industriel dans la coque (1) et on réalise un scellement réitéré du film (3) formant couvercle sur la totalité du bord (2) périphérique de la coque (1).

2. Procédé selon la revendication 1, **caractérisé en ce qu'**avant le deuxième scellement du film (3) formant couvercle, on approche des sections de bord non scellées des extrémités libres de conduits de gaz.

3. Procédé selon la revendication 1 ou la revendication 2, **caractérisé en ce qu'**on procède à la préparation du plat industriel par micro-ondes.
